# EUROPEAN PATENT SPECIFICATION

(11) **EP 0 371 755 B1**
(45) Date of publication and mention of the grant of the patent: **05.01.1994**
(21) Application number: 89312350.5
(22) Date of filing: 28.11.1989
(51) Int. Cl.: B60C 17/00, B60C 13/00

(54) **Pneumatic safety tyre**
Sicherheits-Luftreifen
Pneumatique de sécurité

(30) Priority: 30.11.1988 JP 302977/88
(43) Date of publication of application: 06.06.1990
(73) Proprietor: SUMITOMO RUBBER INDUSTRIES LIMITED, Kobe-shi Hyogo-ken (JP)
(72) Inventor: Kajikawa, Akira, Kobe-shi Hyogo-ken (JP); Itho, Hiroshi, Nishinomiya-shi Hyogo-ken (JP); Kojima, Yoshihide, Takarazuka-shi Hyodo-ken (JP)
(74) Representative: Stewart, Charles Geoffrey

(56) References cited:
- EP-A- 0 128 852
- FR-A- 2 082 073
- FR-A- 2 137 339
- FR-A- 2 215 331
- US-A- 4 779 658

## Description

The present invention relates to a pneumatic safety tyre capable of running safely for a relatively long distance even in such a deflated state as punctured without loss of speed durability or steering stability under normal inflated running.

There is an increasing demand for so-called run flat tyres that can run even if deflated by puncture or other accident. Therefore, tyres provided with an internal support member, such as, a solid elastic member or an inflatable structure to form double independent air chambers have been proposed, but such structures greatly increase the weight and production cost, and therefore they are not practicable.

Meanwhile, conventional pneumatic tyres without special modification may be run for a while as long as it is not dislodged from its location on the rim.

In order to prevent such dislocation from the rims, for example, in Japanese Patent Publication No. 5715007, there have been proposed a tyre and rim assembly in which the tyre beads are provided with radially inwardly extending toes and the rim is provided with annular grooves to receive the bead toes to prevent the dislocation of the tyre beads from the rim due to puncture.

Even though it is possible for the conventional tyres to run for a while under a deflated condition without the tyre being dislocated from the rim, the sidewalls of such a conventional tyre are relatively thin and the hardness thereof is low, and therefore it is poor in load bearing capacity also the tyre is heated when running deflated and may be destroyed or broken by the heat, and hence the travelling distance is in practice extremely short. Therefore, on the assumption that rim dislocation or dislodgement is well controlled, it has been attempted to increase the thickness of sidewalls for less strain, by using a relatively hard rubber with a low heat generation property.

However, by merely increasing the thickness of the hard rubber sidewall, while the run flat performance may be slightly improved, tyre performance properties in normal running and in particular, the high speed durability, steering stability, and ride comfort are sacrificed because of the resultant increase in the bending stiffness of the sidewall and heat generation. Thus an increase in the sidewall thickness brings about contradictory effects on the run flat performance and usual running performance.

A pneumatic safety tyre according to the preamble of claim 1 comprising, in the sidewall portions inwardly of the carcass, a pair of reinforcing layers to improve load support and anti-crack properties is disclosed by US-A-4779658. A pneumatic tyre having the minimum thickness of the sidewall located between the edge of the tread and a point at 65% of the tyre section height is disclosed by FR-A-2137339.

It is therefore an object of the present invention to provide a safety tyre, in which by optimising the change of the overall thickness of the sidewall the run flat performance is improved to allow running for a relatively long distance at a relatively high speed in a deflated condition to provide a high level of safety, without practically lowering the usual running performance in a normal or not deflated condition, such as high speed durability.

According to the present invention a pneumatic safety tyre comprises a pair of bead portions with a bead core, sidewall portions extending radially outwardly one from each bead portion, a tread portion extending between the sidewall portions, a toroidal carcass extending through the tread and sidewall portions and turned up at both edges around the bead cores, a tread and sidewalls disposed outwardly of the carcass, a belt disposed between the carcass and the tread and having cords laid at a relatively small angle to the equator of the tyre, and a sidewall reinforcing layer disposed inwardly of the carcass in each sidewall portion, characterised by each sidewall portion being provided with a minimum thickness TE at a position E between an outer edge point A and a 65% height point B, the thickness of each sidewall gradually increasing from the minimum thickness position E toward the 65% height point B, wherein the outer edge points A are defined as the axially outer edges of a ground contacting region on the tread surface in the standard loaded state in which the tyre is mounted on its regular rim R, inflated to its regular pressure and is loaded with its regular load, and the 65% height points B are defined as the positions at 65% height of the tyre section height H from the bead base in the standard unloaded state in which the tyre is mounted on its regular rim and inflated to its regular pressure but unloaded and the difference between the thickness TB at the 65% height point and the minimum thickness TE is in the range of 2.0 to 5.0mm.

When running under the standard loaded state, the portions between the outer edge point A and the 65% height point B are most subjected to bending deformation. therefore, by setting the minimum thickness point E in this range, the tyre is provided with flexibility, and loss of steering performance is prevented, heat generation in this portion is reduced, and any decline in the high speed durability performance is suppressed. As a result, the run flat performance which is a contradictory condition to that of normal high speed durability performance and steering performance can be improved.

In addition, the sidewall thickness is increased gradually from the minimum thickness point E to the 65% height point B. As a result, local thickness fluctuations are decreased, and thereby generation of stress concentration is suppressed. Also by the gradual increase in the sidewall thickness, absorption of impact or reaction when running over protuberances can be improved, which contributes to an improvement in the performance envelope.

Thus the present invention can enhance the run flat performance and yet prevent loss of tyre performance by defining the distribution of the sidewall thickness within a special range.

An embodiment of the present invention will now ne described in detail with reference to the drawings, in which:-
Fig.1. is a sectional view showing an embodiment of the present invention
Fig.2. is a schematic sectional view thereof
Fig.3 is a diagram showing the thickness distribution of working examples of the present invention and reference examples and
Fig.4 is a sectional view showing the deformation of the tread 5.

In the Figures, the safety tyre 1 is formed as a 255/40 ZR 17 tyre.

The tyre 1 has bead portions 3 each provided with a bead core 2, a sidewall portion 4 extending radially outwardly from each bead portion 3, and a tread portion 5 extending between the upper ends of the sidewall portions to form a toroidal shape.

The tyre comprises a carcass 6 having a main portion extending between the bead portions 3 through the sidewall portions 4 and the tread portion 5, a belt 7 disposed radially outside the carcass 6 in the tread portion, and a sidewall reinforcing layer 10 of approximately crescent shape disposed inside the carcass 6 in each sidewall portion. In this embodiment, the tyre 1 was designed for high speed passenger cars, and the aspect ratio thereof, that is, the ration H/W of the tyre sectional height H to the tyre width W is not more than 50% being in fact 40%.

The carcass 6 is turned up around the bead cores from the axially inside to the outside thereof to form turned up portions. The carcass has two plies 6A, 6B of cords arranged radially at an angle of 60 to 90 degrees to the equator of the tyre, and steel cords as well as organic fibre cords such as rayon, polyester, nylon, aromatic polyamide, and the like can be used for the carcass cords.

The belt 7 disposed in the tread portion is composed of an axially inner wide ply 7A and an outer narrow ply 7B, which consist of parallel cords arranged at a relatively small angle to the equator of the tyre so that the plies cross each other. For the belt cords, steel cords or high modulus organic fibre cords such as aromatic polyamide can be preferably used, but low modulus cords such as nylon, polyester or rayon may be used together therewith. When organic cords having a relatively smaller modulus are used, they may allow the belt to follow up deformation of the carcass 6 while maintaining the hoop effect.

Further, a breaker cushion 9 made of soft rubber is disposed between each edge of the belt and the carcass.

Further, on the radially outer surface of the belt 7, bands 8 are disposed. The bands 8 consist of a full width outside band 8B and a pair of narrower edge inside bands 8A.

Each of the inside bands 8A is extended axially inwardly from a position axially outwardly of each of the axially outer edges of the belt 7, and terminate to leave between the axially inner edges of the inside bands, a space having about 1/2 width of the tread width.

The outside band 8B extends all over the width of the tread 5 to cover the belt 7 and the edges are substantially aligned with the axially outer edges of the inside bands.

Both the bands 8A, 8B are made of organic fibre cords such as rayon, nylon, polyester or the like so as to mitigate the shearing strain acting between the belt 7 and the rubber tread when the tyre is deformed, thereby preventing separation failure around the belt edge portion.

As mentioned above, in each of the sidewall portions 4, a sidewall reinforcing layer 10 is disposed inside the carcass.

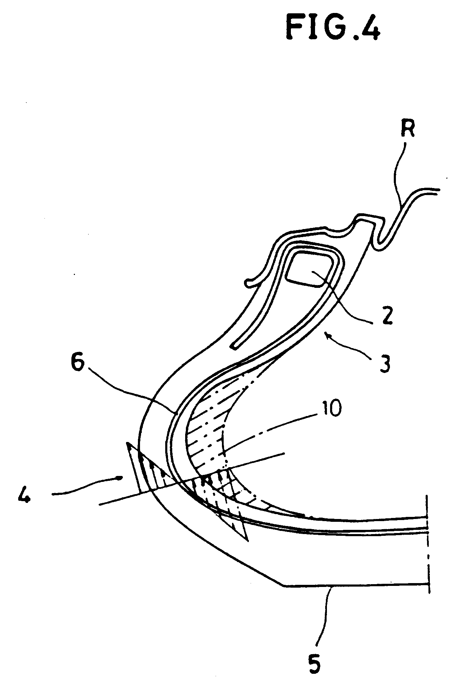

As the carcass cord has a tensile rigidity more than ten times the rigidity of the sidewall rubber, if the sidewall portions are deformed in a deflated state by a load as shown in Fig.4, the bent part is subjected to both tensile strain and compressive strain on the axially outer side and inner side of the neutral carcass cords, respectively. Such compressive strain is carried by the sidewall reinforcing later 10, being a relatively hard material so as to enable the tyre to run even when deflated.

For this purpose, the thickness of the sidewall reinforcing layer 10 is a maximum in the mid-sidewall portion 10A which receives a large compressive strain when deflated, and in the radially outwardly portion 10B and inward portion 10C the thickness is decreased radially outwardly and inwardly respectively, so that the sectional shape of the sidewall reinforcing layer becomes a crescent shape, thereby preventing a decline in the tyre characteristics due to increase in the weight.

The sidewall reinforcing layer 10 in this embodiment has a three layered structure where the axially inside layer A1 and the outside layer A3 are formed thinner than the intermediate layer A2, and the inside and outside layers are made of a relatively soft rubber having a Shore A of 50 to 70 degrees and a 100% modulus of 10 to 30 kgf/cm², and the intermediate later is made of a relatively hard rubber having a Shore A hardness of 70 to 90 degrees and a 100% modulus of 30 to 70 kgf/cm².

As a result, the inside layer A1 made of soft rubber can alleviate the local compressive strain caused on the inner surface of the intermediate layer A2 when running under a deflated condition, and cracks can be prevented to enhance the breakdown resistance.

Although maximum bending and compressive strains act on this inside layer A1, breakdown can be prevented due to the use of a soft rubber which is excellent in crack resistance. The outside layer A3, disposed between the carcass and the intermediate layer A2, can avoid a reduction in ride comfort due to the use of the hard rubber intermediate layer A2, and it is also effective for relaxing the shear strain which occurs between them, so that failure of the intermediate later A2 due to excessive generated heat is prevented.

In the present invention, the point resides in the optimum distribution of the overall thickness of the sidewall portion, inclusive of the above mentioned carcass, rubber sidewalls and sidewall reinforcing layers.

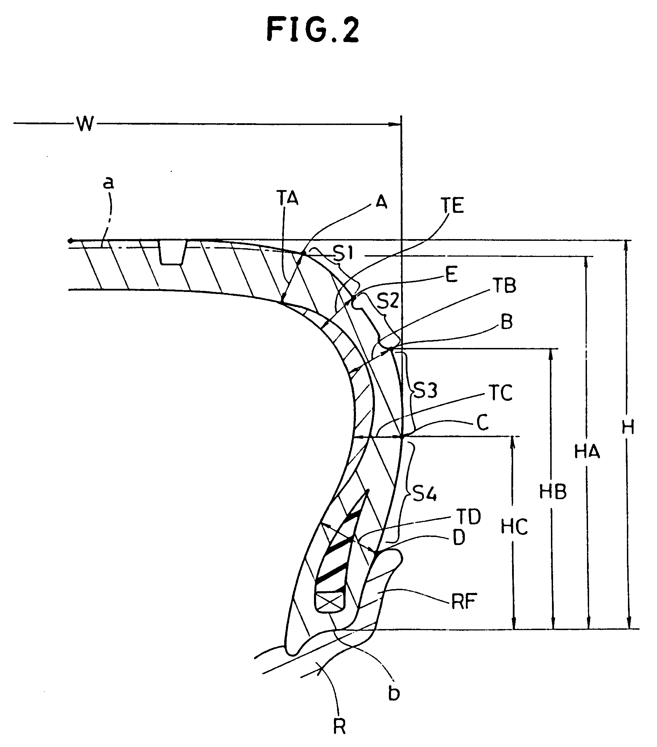

Accordingly, as shown in Fig.2 each sidewall portion has a minimum thickness at a portion E between an outer edge point A and a 65% height point B both located on each of the sidewall portions. Here the outer edge points A are defined as the axially outer edges of a ground contacting region (a) on the tread surface in a standard loaded state in which the tyre mounted on its regular rim R and inflated to its regular pressure is loaded with its regular load. The 65% height points B are defined as the positions at 65% height HB of the tyre section height H from the bead base b in the standard unloaded state when the tyre is mounted on its regular rim and inflated to its regular pressure and free of load (i.e. HB=0.65H). More specifically, the region defined between the outer edge point A and the 65% height point B (hereinafter referred to as the first region) does not contact the ground in normal running, and this region is located near the ground contacting surface (a), therefore it is desired to decrease the thickness to lower the heat generation in order to enhance the high speed durability performance. Such an arrangement also leads to a decrease in the vertical stiffness, thereby improving ride comfort and steering performance. Accordingly, the minimum thickness position E must be formed between the outer edge point A and the 65% height point B. Further, the first region contacts the road surface when running in a deflated state, and therefore from this viewpoint, too, it is evident that the increase of thickness of the first region does not contribute to the enhancement in the run flat performance.

Furthermore, in the pneumatic safety tyre 1, the overall thickness is gradually increased in the region S2 from the minimum thickness E to the 65% height point B. As a result of avoiding an abrupt change in the sidewall thickness, stress concentration is prevented, and gradually increasing the vertical stiffness toward the 65% height point B, the runflat performance and the impact absorbing performance in normal running are improved.

The height HA at the outer edge point A is generally between 82 to 98% of the sectional height H.

The difference between the thickness TA at the outer edge point A and the thickness TB at the 65% height point B is set to be not more than 5% of the maximum tyre section width W formed between the maximum width point C in the above explained standard unloaded state. More preferably it is set within 3.5% of the maximum width W, so that a desirable overall thickness distribution is obtained. Meanwhile, the thickness TA may be set either larger or smaller than the 65% height point thickness TB, within the above range.

The minimum thickness TE is set to be about 65 to 85% of the thickness TB at the 65% height point.

Furthermore, in the tyre of the above mentioned size of this embodiment, the difference (TB-TE) of the 65% height point, thickness TB and the minimum thickness TE are set in a range of 2.0 to 5.0mm, and the minimum thickness TE is not less than 10 mm and not more than 13 mm.

If the difference (TB-TE) is less than 2.0mm the minimum thickness TE becomes excessive or the 65% height point thickness TB becomes too small. If exceeding 5mm, the reverse effects are caused, and it is known that any desirable thickness distribution is not obtained in either case.

Besides, if the minimum thickness TE is less than 10mm, the load bearing capacity of the tyre drops, and if exceeding 13mm, the generation of heat in the area increases, and the durability may be sacrificed.

What is more, in a third region S3 from the 65% height point B to the maximum width point C in the standard unloaded state, the sidewall thickness is gradually increased from the point B to the point C because the deformation of the sidewall portions when deflated is largest in the vicinity of the maximum width point C. As a result the deformation is restrained, and the run flat performance is enhanced.

Furthermore, the thickness TC at the maximum width point C is set to be not less than 4.5% and not more than 9% of the tyre maximum width W. This is the range of withstanding the bending stress, neither excessively nor insufficiently, during run flat running.

In a fourth region S4 from the maximum width point C to a point D at which the bead portion starts to contact with a rim flange RF of the rim R, the thickness is increased from the former to the later.

The thickness TD at the contact point D is set to be not less than 5% and not more than 10% of the tyre maximum width W.

Furthermore, in the tyre of the tyre size of 225/40ZR17, the difference (TD-TC) in thickness between the contact point D and the maximum width C is not less than 2.0mm and not more than 5.0mm.

In the portion around the upper edge of the rim flange TF, a large bending deformation is likely to occur when running in a flat condition, and accordingly the heat generation is increased, and damages such as ply separation are likely to occur, thereby tending to spoil the run flat performance.

Accordingly, in order to prevent damage of the bead portion, the thickness TD at the contact point D is increased as mentioned above, whereby the run flat performance can be enhanced.

Still more, in the tyre 1, between each of the bead cores 2 and the carcass 6, a bead reinforcing layer 12 is disposed to prevent abrasion of the bead core or carcass ply due to movement of the carcass 6 accompanying deformation of the tyre, and further, above the bead core 2, a bead apex 13 extending taperingly radially outwardly is disposed between the carcass main portion and each of the turned up portions and inside the bead reinforcing layer 12, so as to increase the rigidity of the bead 3.

The bead apexes 1 help to keep the deformed shape of the portion of the lower sidewall above the bead in a specified standard curved shape. For this reason, the bead apex 9 is made of a relatively hard rubber having a Shore A hardness of 74 to 95 degrees.

Each of the bead portions 3 is further provided in the axially innermost portion with a toe strip made of hard rubber to form a bead toe 14 which projects radially inwardly from the bead base line L. The bead base is provided with a convex hump groove 15 located immediately axially outside the toe 14.

Also, a rim chafer 19 to prevent chafe of the bead by the rim R is disposed to extend from the axially inside of the bead portion toward the axially outside along the profile of the bead toe 14 and the hump groove 15.

On the other hand, the rim R is provided at each side with annular groove 16 into which the bead toe 14 is fitted and a hump 17 which fitted into the hump groove 15. By the engagement therebetween, the bead portions are seated on the rim R safely preventing the tyre from being dislocated from the rim when deflated.

Incidentally, such a toe and a hump groove may be disposed at either both or one of the beads 3.

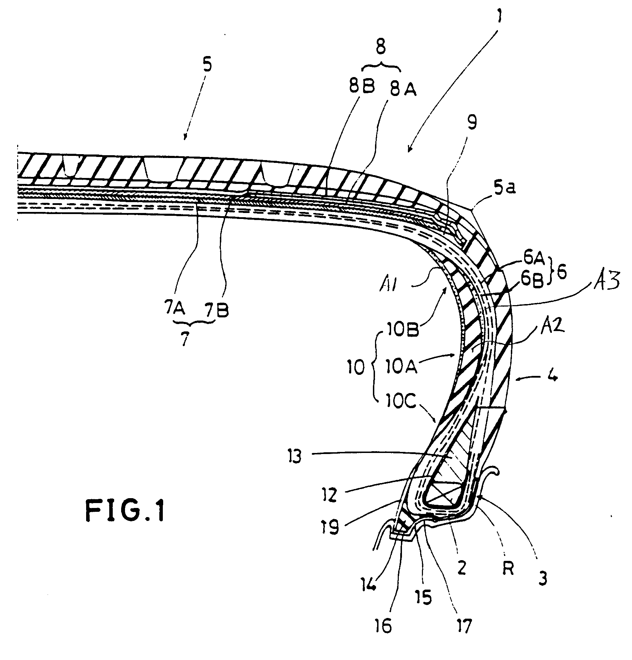

Test tyres of 255/40 ZR17 size were experimentally fabricated according to the specification given in Table 1 and the structure shown in Fig.1.

In Working example 1, the thickness TC at the maximum width point C was 5.7% of the maximum width W of the tyre, and the thickness was gradually increased from the minimum thickness point E to the contact point D. In Working Examples 2, the thickness was almost uniform from the 65% height point B to the maximum width point C. The thickness was gradually increased from the maximum width C to the contact point D.

By contrast, in Reference 1, the maximum thickness portion was formed between the outer edge point of the ground contacting region S and the 65% height point B. In Reference 2, the thickness distribution was similar to reference 2, but the thickness was reduced as compared with Reference 1. In Reference 3, the thickness distribution was further decreased.

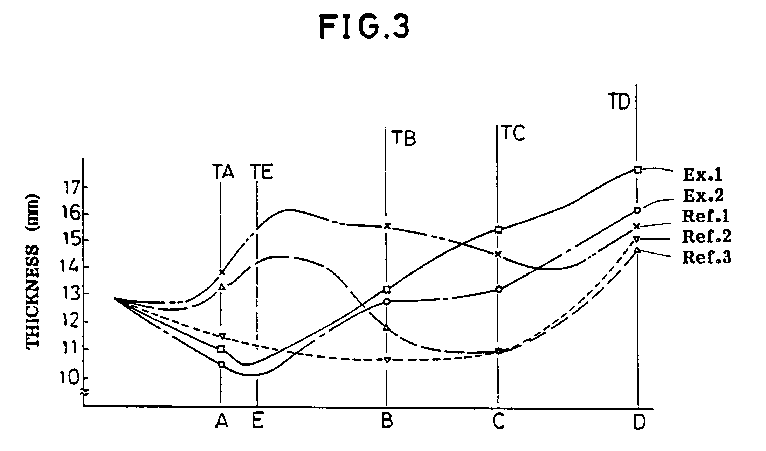

Those thickness distribution of the test tyres are summarised in Fig.3.

Each test tyre was mounted on a rum R having the structure shown in Fig.1. The rim width was 10 inches.

The assemblies were mounted on four wheels of a 5000cc automobile, which was run at 100 km/h with one wheel deflated to zero to simulate a puncture state, and then the distance until the deflated tyre was broken was measured.

The results are shown in Table 1. As apparent from table 1, the run flat performance was largely improved by the invention.

Furthermore, the tyres were tested for high speed inflated durability performance using an indoor drum tester.

Setting the internal pressure ar 3.2 kg/cm², the load at 525 kg, the camber angle at 1 degree and the rim size at 10 x 17, the rotating speed was increased from 250 km/h in 10km/h intervals every 20 minutes. The speed at which a breakdown occurred, and the time (minutes) to reach the breakdown at that speed are shown in table 1, from which it was shown that the tyre of Examples 1 and 2 were both excellent in high speed durability.

On the contrary, Reference 1 having the maximum thickness between the outer edge point A and the 65% height point B was inferior in high speed durability.

Moreover, running an actual car on a circuit course, the tyres were tested to check and assess any steering performance loss. The results of this are shown in Table 1 using an index based on the assumption that Reference 3 was 100. The larger the index, the better was the result.

As apparent from the test results, the tyres of Examples 1 and 2 maintained an excellent steering performance the same as in the conventional tyre, in spite of their superior run flat performance.

As described above, in the pneumatic safety tyres according to the present invention, as the distribution of the sidewall thickness inclusive of the sidewall reinforcing layer thickness, is optimised while providing a minimum thickness position between each of the outer edge point A of the ground contacting region on the tread surface and the 65% height point B, the run flat performance can be remarkably improved without sacrificing the high speed durability performance and the steering performance.

**TABLE 1**

| | Ex.1 | Ex.2 | Ref.1 | Ref.2 | Ref.3 |
|---|---|---|---|---|---|
| Thickness | | | | | |
| TA (mm) | 11.0 | 10.5 | 13.8 | 13.6 | 11.5 |
| TB (mm) | 13.2 | 12.8 | 15.5 | 11.8 | 10.8 |
| TC (mm) | 15.5 | 13.3 | 14.5 | 11.0 | 11.0 |
| TD (mm) | 17.6 | 16.2 | 15.7 | 14.7 | 15.3 |
| TE (mm) | 10 | 9.8 | 17.0 | 14.5 | 12.5 |
| Running distance (km) | 98 | 85 | 67 | 33 | 21 |
| High speed durability | 330 km/h 9 min. | 350 km/h 5 min. | 290 km/h 6 min. | 320 km/h 18 min. | 330 km/h 15 min. |
| Steering stability | 99 | 101 | 91 | 97 | 100 |

## Claims

1. A pneumatic safety tyre comprising a pair of bead portions (3) with a bead core (2), sidewall portions (4) extending radially outwardly one from each bead portion (2), a tread portion (5) extending between the sidewall portions (4), a toroidal carcass (6) extending through the tread (5) and sidewall portions (4) and turned up at both edges around the bead cores (2), a tread and sidewalls disposed outwardly of the carcass (6), a belt (7) disposed between the carcass (6) and the tread (5) and having cords laid at a relatively small angle to the equator of the tyre, and a sidewall reinforcing layer (10) disposed inwardly of the carcass in each sidewall portion (4), characterised by each sidewall portion (4) being provided with a minimum thickness TE at a position E between an outer edge point A and a 65% height point B, the thickness of each sidewall (4) gradually increasing from the minimum thickness position E toward the 65% height point B, wherein the outer edge points A are defined as the axially outer edges of a ground contacting region on the tread surface in the standard loaded state in which the tyre is mounted on its regular rim R, inflated to its regular pressure and is loaded with its regular load, and the 65% height points B are defined as the positions at 65% height of the tyre section height H from the bead base (b) in the standard unloaded state in which the tyre is mounted on its regular rim and inflated to its regular pressure but unloaded and the difference between the thickness TB at the 65% height point and the minimum thickness TE is in the range of 2.0 to 5.0mm.

2. A pneumatic tyre according to claim 1 characterised in that each sidewall portion (4) gradually increases in thickness from the 65% height point B toward the maximum width position C where the axial section width of the tyre is maximum in the standard unloaded state.

3. A pneumatic tyre according to claim 1 or 2 characterised in that each sidewall portion (4) gradually increases in thickness from the maximum width position (C) where the axial section width (W) of the tyre is maximum in the standard unloaded state, towards a contact position (D) where the bead portion (4) contacts with the flange (RF) of the rim, and the thickness (TD) at the contact position (D) is larger than the thickness (TC) at the maximum width position (C).

4. A pneumatic tyre according to claim 3, characterised in that the difference between the thickness (TD) at the contacting position (D) and the thickness (TC) at the maximum width position (C) is in the range of 2.0 to 5.0mm.

## Patentansprüche

1. Sicherheits-Luftreifen, welcher umfaßt ein Paar Wulstabschnitte (3) mit einem Wulstkern (2), Seitenwandabschnitte (4), die sich von einem jeden Wulstabschnitt (2) radial nach außen erstrecken, einen Laufstreifenabschnitt (5), der sich zwischen den Seitenwandabschnitten (4) erstreckt, eine toroidförmige Karkasse (6), die sich durch die Laufstreifen- (5) und die Seitenwandabschnitte (4) erstreckt und an beiden Seiten um die Wulstkerne (2) nach oben zurückgeschlagen ist, wobei ein Laufstreifen und Seitenwände an der Karkasse (6) nach außen angeordnet sind, ein Gürtel (7) zwischen der Karkasse (6) und dem Laufstreifen (5) angeordnet ist und mit einem relativ kleinen Winkel zum Reifenäquator gelegte Korde besitzt, und eine Seitenwandverstärkungslage (10) innerhalb der Karkasse in jedem Seitenwandabschnitt (4) angeordnet ist, dadurch gekennzeichnet, daß jeder Seitenwandabschnitt (4) an einer Stelle E zwischen einer äußeren Kantenstelle A und einer Stelle B mit 65% Höhe mit einer minimalen Dicke TE versehen ist, die Dicke jeder Seitenwand (4) allmählich von der Position E minimaler Dicke zu der Stelle B mit 65% Höhe zunimmt, wobei die äußeren Kantenstellen A bestimmt sind als die axial äußeren Kanten eines Bodenaufstandsbereichs an der Laufstreifenoberfläche in dem Standardbelastungs-Zustand, bei dem der Reifen auf seine reguläre Felge R aufgezogen, auf seinen regulären Druck aufgepumpt und mit seiner regulären Last belastet ist, und die Stellen B mit 65% Höhe bestimmt sind als die Positionen bei 65% der Reifenquerschnittshöhe H, gemessen von dem Wulstgrund (b) in dem unbelasteten Standard-Zustand, bei dem der Reifen auf seine reguläre Felge aufgezogen und auf seinen regulären Druck aufgepumpt, jedoch unbelastet ist, und die Differenz zwischen der Dicke TB an der Stelle mit 65% Höhe und der minimalen Dicke TE im Bereich von 2,0 bis 5,0 mm liegt.

2. Luftreifen nach Anspruch 1, dadurch gekennzeichnet, daß die Dicke jedes Seitenwandabschnitts (4) allmählich zunimmt von der Stelle B mit 65% Höhe zu der Position C mit maximaler Breite, bei der die axiale Querschnittsbreite des Reifens im unbelasteten Standard-Zustand maximal ist.

3. Luftreifen nach Anspruch 1 oder 2, dadurch gekennzeichnet, daß die Dicke jedes Seitenwandabschnitts (4) allmählich zunimmt von der Stelle maximaler Breite (C), bei der die axiale Querschnittsbreite (W) des Reifens in unbelastetenm Standard-Zustand maximal ist, zu einer Berührungsstelle (D), bei der der Wulstabschnitt ((4) das Felgenhorn (RF) berührt, und die Dicke (TD) an der Berührungsstelle (D) größer ist als die Dicke (TC) an der Stelle (C) maximaler Breite.

4. Luftreifen nach Anspruch 3, dadurch gekennzeichnet, daß die Differenz zwischen der Dicke (TD) an der Berührungsstelle (D) und der Dicke (TC) an der Stelle (C) maximaler Breite im Bereich von 2,0 bis 5,0 mm liegt.

## Revendications

1. Pneumatique de sécurité, comprenant une paire de parties (3) de talon ayant une tringle (2), des parties (4) de flanc dépassant radialement à l'extérieur de chacune des parties de talon (2), une partie (5) de bande de roulement disposée entre les parties (4) de flanc, une carcasse toroïdale (6) disposée dans les parties de bande de roulement (5) et de flanc (4) et repliée aux deux bords autour des tringles (2), une bande de roulement et des flancs placés à l'extérieur de la carcasse (6), une ceinture (7) placée entre la carcasse (6) et la bande de roulement (5) et ayant des câblés faisant un angle relativement petit avec l'équateur du pneumatique, et une couche (10) d'armature de flanc disposée vers l'intérieur de la carcasse dans chaque partie de flanc (4), caractérisé en ce que chaque partie de flanc (4) a une épaisseur minimale TE à une position E comprise entre un point de bord externe A et un point B à 65 % de hauteur, l'épaisseur de chaque flanc (4) augmentant progressivement de la position E d'épaisseur minimale vers le point B à 65 % de hauteur, les points de bord externe A étant déterminés comme étant les bords axialement externes d'une région de contact avec le sol de la surface de la bande de roulement à l'état normal sous charge dans lequel le pneumatique est monté sur sa jante normale R, est gonflé à sa pression normale et est soumis à sa charge normale, et les points B à 65 % de hauteur sont définis comme étant les positions correspondant à 65 % de hauteur de la hauteur H de la section du pneumatique par rapport à la base (b) de talon à l'état normal sans charge dans lequel le pneumatique est monté sur sa jante normale et est gonflé à sa pression normale mais n'est soumis à aucune charge, et la différence entre l'épaisseur TB au point à 65 % de hauteur et l'épaisseur minimale TE est comprise entre 2,0 et 5,0 mm.

2. Pneumatique selon la revendication 1, caractérisé en ce que chaque partie de flanc (4) a une épaisseur qui augmente progressivement du point B à 65 % de hauteur vers la position C de largeur maximale à laquelle la largeur axiale en coupe du pneumatique est maximale à l'état normal sans charge.

3. Pneumatique selon la revendication 1 ou 2, caractérisé en ce que chaque partie de flanc (4) a une épaisseur qui augmente progressivement de la position (C) de largeur maximale à laquelle la largeur (W) de la section axiale du pneumatique est maximale à l'état normal sans charge, vers une position (D) de contact à laquelle la partie de talon (4) est au contact du flasque (RF) de la jante, et l'épaisseur (TD) à la position de contact (D) est supérieure à l'épaisseur (TC) à la position (C) de largeur maximale.

4. Pneumatique selon la revendication 3, caractérisé en ce que la différence entre l'épaisseur (TD) à la position de contact (D) et l'épaisseur (TC) à la position de largeur maximale (C) est comprise entre 2,0 et 5,0 mm.
